# DEMANDE DE BREVET EUROPEEN

(11) **EP 0 633 117 A1**
(43) Date de publication de la demande: **11.01.1995**
(21) Numéro de dépôt: 94420164.9
(22) Date de dépôt: 07.06.1994
(51) Int. Cl.: B29C 45/14, B29C 45/32

(54) **Dispositif pour amener et déposer dans un moule une étiquette sur un objet moulé**

(30) Priorité: 15.06.1993 FR 9307439
(71) Demandeur: PLASTIQUES RG, F-01430 Maillat (FR); Goujon, Daniel, F-01460 Brion (FR)
(72) Inventeur: Goujon, Daniel, F-01460 Brion (FR); Daniel, Robert, F-01430 Maillat (FR)
(74) Mandataire: Laurent, Michel

(57) **Abrégé**

Ce dispositif est destiné à un moule à double étages.

Il comprend un organe de transfert (21,22,24,30) de l'étiquette dans le moule lors de l'ouverture de celui-ci, constitué par un double jeu de courroies montées en boucles fermées, et mues en translation sensiblement verticale entre un magasin (10) et l'intérieur du moule, respectivement un premier jeu de deux courroies continues dites "d'appui" (22), s'étendant jusqu'au niveau supérieur de l'empreinte femelle (9) considérée, et un second jeu de deux courroies dites "de maintien" (24,30), en contact étroit au moins temporairement avec le jeu de courroies de maintien.

## Description

L'invention concerne un nouveau dispositif, destiné à amener et déposer une étiquette, notamment une étiquette souple, dans un moule de machines à injection de matière plastique à double étages, sur un objet moulé et plus exactement en cours de moulage.

De manière connue, une telle machine dite "à double étages" est constituée d'une partie fixe et d'une partie mobile, cette dernière étant mue linéairement au moyen d'une presse. Le moule proprement dit, intégré dans une telle machine est constitué de trois éléments principaux, à savoir :
- d'une part, un premier élément fixe, solidaire de ladite partie fixe et comportant un premier jeu d'empreintes femelles, c'est à dire taillées en creux, et correspondant à la forme de l'objet à réaliser lors de l'injection de la matière plastique ;
- d'autre part, un deuxième élément mobile en translation, solidaire de ladite partie mobile, et comportant également un jeu d'empreintes femelles ;
- et enfin, un bloc central, portant sur chacune de ses faces principales en regard desdits éléments femelles respectivement fixes et mobiles, un jeu d'empreintes mâles en relief, destinées à coopérer avec lesdites empreintes femelles, ledit bloc central étant mu également en translation et ce sous l'action de la partie mobile, à une vitesse inférieure à la vitesse de translation de ladite partie mobile.

De manière traditionnelle, le bloc central est mu au moyen d'un jeu de crémaillères, respectivement solidaires de la partie mobile et de la partie fixe de la machine à injecter, et coopérant au niveau dudit bloc central par un pignon denté dans lequel engrenent lesdites crémaillères.

L'avantage d'un tel moule à double étages ressort de manière évidente, dans la mesure où il permet d'augmenter de manière significative les cadences de fabrication des produits concernés, tout en optimisant l'effort engendré par la presse lors de la fermeture du moule, compte-tenu des positions respectives de chacun des jeux d'empreintes mâles et femelles en regard les uns des autres.

En revanche, cette utilisation se heurte à un problème majeur, à savoir la nécessité d'amener et de déposer au niveau desdites empreintes une étiquette, éventuellement de forme complexe, et destinée à revêtir au moins partiellement l'objet moulé.

En effet, les dispositifs traditionnels connus à ce jour, tels que notamment les dispositifs munis de crémaillères et autres systèmes équivalents, et de manière plus générale les dispositifs d'amenée d'étiquettes du type "accompagné", génèrent un double inconvénient. Tout d'abord se pose le problème du positionnement de l'étiquette en relation avec les empreintes. Ensuite et surtout, la vitesse d'amenée de l'étiquette dans le moule doit être corrélée avec la vitesse de fermeture de celui-ci, et constitue donc pour cette dernière un facteur limitant, affectant de manière significative la cadence de production et par voie de conséquence, le gain obtenu de par le principe même du moule à double étages.

En outre, dans un souci de diminution de l'encombrement généré par de telles machines, on cherche à minimiser la course de la partie mobile et partant du bloc central, de sorte que le laps de temps laissé à la phase d'accompagnement de l'étiquette à l'intérieur du moule s'en trouve particulièrement réduit, interdisant de la sorte lesdits systèmes d'accompagnement reposant sur le principe des cames, crémaillères, etc...

On a proposé une machine mettant en oeuvre un système différent du système dit d'"accompagnement", et qui consiste à acheminer l'étiquette au niveau d'une goulotte de forme parallélipipédique, située au dessus du moule, et à laisser descendre par simple gravité l'étiquette au niveau de l'empreinte, où au niveau du moule, elle est guidée au moyen de glissières, et où au niveau de l'empreinte, elle est reçue par des saillies placées de manière appropriée de telle sorte à arrêter sa chute.

Si certes par ce biais on s'affranchit des inconvénients liés au principe même d'accompagnement des dispositifs connus à ce jour, en revanche, du fait de la légèreté des étiquettes utilisées et de leur souplesse, la vitesse de chute dans le moule est aléatoire, jamais constante, et en tout cas insuffisante compte-tenu des cadences de fabrication recherchées. En outre, on ne peut être assuré de son positionnement précis en regard des empreintes concernées.

L'objet de l'invention est donc de proposer un dispositif reposant sur le principe dit d'accompagnement de l'étiquette dans le moule, s'affranchissant de ces différents inconvénients et susceptibles d'accompagner tout type d'étiquettes dans le moule, notamment des étiquettes très légères, de forme complexe, de rigidité très réduite, et ce de manière suffisamment rapide et suffisamment précise pour répondre à ces nouvelles exigences.

Ce dispositif pour amener et déposer une pluralité d'étiquettes souples dans un moule de machines à injection de matière plastique à double étage comprend :
- un premier élément fixe, incluant un premier jeu d'empreintes femelles, correspondant à la forme de l'objet à réaliser lors de l'injection de la matière plastique ;
- un deuxième élément, mobile en translation, comprenant également un jeu d'empreintes femelles,
- un bloc central, portant sur chacune de ses faces principales en regard desdits éléments respectivement fixe et mobile, un jeu d'empreintes mâles, destinées à coopérer avec lesdites empreintes femelles, ledit bloc étant mu également en translation sous l'action de l'élément mobile à une vitesse inférieure à la vitesse de translation de celui-ci,
- un magasin associé à chacun des jeux d'empreintes femelles, disposé respectivement au dessus des éléments fixe et mobile du moule,
- pour chacune des empreintes femelles, un moyen d'amenée de l'étiquette en regard de l'empreinte femelle de chacun des éléments fixe et mobile du moule, comprenant chacun un organe de saisie de l'étiquette dans le magasin correspondant et un organe de transfert de l'étiquette dans le moule lors de l'ouverture de celui-ci.

Ce dispositif se caractérise en ce que l'organe de transfert de l'étiquette dans le moule est constitué par un double jeu de courroies montées en boucles fermées, et mues en translation sensiblement verticale entre le niveau dudit magasin et l'intérieur du moule, respectivement un premier jeu de deux courroies continues dites "d'appui", s'étendant jusqu'au niveau supérieur de l'empreinte femelle considérée, et un second jeu de deux courroies dites "de maintien", en contact étroit au moins temporairement avec le jeu de courroies de maintien, et dont la portion supérieure est susceptible de pivoter en direction dudit magasin lors de la fermeture du moule afin de permettre la mise en place de l'étiquette juste issue du magasin en regard au niveau des courroies d'appui, l'ensemble des courroies étant mues en translation au moyen de deux vis sans fin horizontales par l'intermédiaire de deux renvois d'angle positionnés respectivement au niveau de l'élément fixe et de l'élement mobile du moule, la rotation des vis sans fin horizontales étant elle même assurée par le déplacement relatif de l'élément mobile et du bloc central par rapport respectivement au bloc central et à l'élément fixe, ledit bloc central étant muni d'un écrou fixe au niveau duquel coopèrent lesdites vis horizontales.

En d'autres termes, l'invention consiste à munir chacune des empreintes femelles d'un organe de transfert de l'étiquette, dont le fonctionnement est directement corrélé à l'ouverture et à la fermeture du moule, et dont le principe consiste à maintenir l'étiquette considérée entre deux jeux de courroies afin d'assurer d'une part, sa descente rapide au niveau de l'empreinte et son positionnement précis au niveau de celle-ci.

Selon une caractéristique avantageuse de l'invention, l'extrémité supérieure des poulies de renvoi des deux courroies dites de maintien sont montées à l'extrémité d'un bras pivotant solidaire d'un secteur denté, d'axe de rotation verticale, ledit secteur denté étant susceptible de coopérer avec une crémaillère activée en translation au moyen d'un verin commandé par l'automate de programmation de l'ouverture et de fermeture du moule.

De la sorte, lors de la fermeture du moule, il y a pivotement vers l'intérieur de l'extrémité supérieure des courroies dites de maintien et parallèlement actionnement de l'organe de saisie des étiquettes dans le moule, constitué par une main de préhension à débattement horizontal, destinée à prendre unitairement une étiquette dans le magasin et à la placer contre les courroies dite d'appui. De la sorte, l'étiquette est toujours prise en charge et n'est abandonnée au niveau de l'empreinte que lors de la fermeture du moule.

La manière dont l'invention peut être réalisée et les avantages qui en découlent ressortiront mieux de l'exemple de réalisation qui suit, donné à titre indicatif et non limitatif à l'appui des figures annexées.

La figure 1 est une représentation schématique en perspective de la machine à injecter conforme à l'invention, le moule étant en position ouverte.

La figure 2 est une représentation schématique en détail d'une partie du cheminement des courroies, la vue étant réalisée face à la partie fixe ou mobile du moule.

La figure 3 est une vue analogue à la figure 2, mais réalisée de profil.

Les figures 4 et 5 illustrent le fonctionnement de la portion supérieure des courroies dites de maintien, conformément à l'invention.

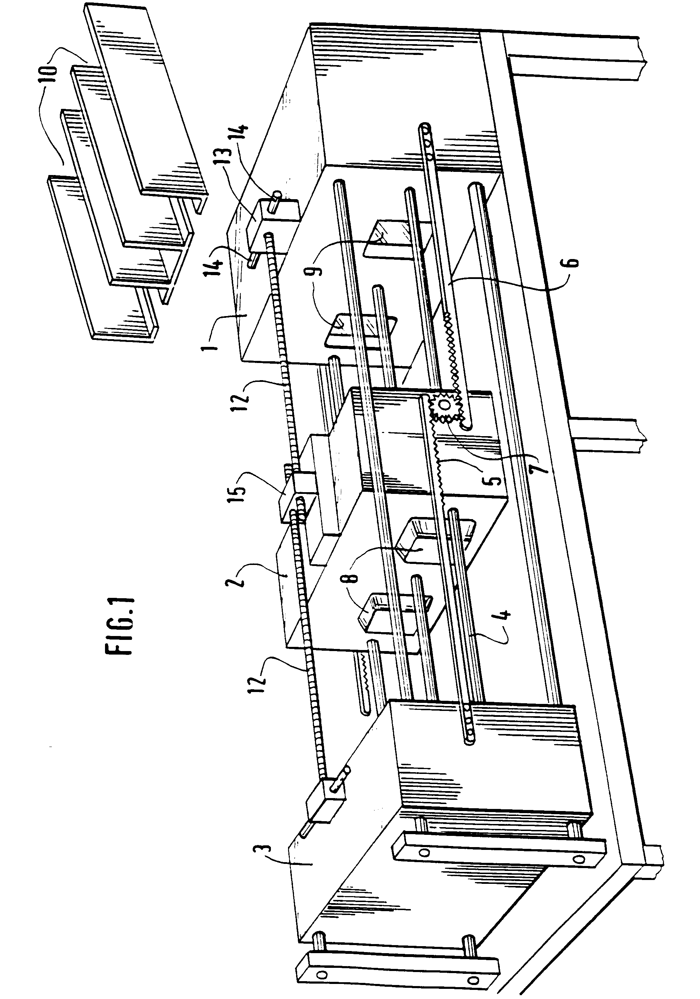

L'invention est décrite en liaison avec une machine de moulage par injection de matière plastique à double étages, du type de celle représentée schématiquement sur la figure 1. De manière connue, cette machine comprend essentiellement trois éléments principaux, constitutifs du moule proprement dit :
- tout d'abord un premier élément fixe (1), comportant un jeu d'empreintes femelles (9), matérialisées en creux, et correspondant à la forme de l'objet à réaliser ; dans l'exemple décrit, cet élément fixe comporte deux empreintes femelles, mais il est bien entendu que ce nombre n'est pas limitatif, et qu'il peut atteindre 5 ou 6 ;
- ensuite, un second élément, mobile (3), activé en translation au moyen d'une presse (non représentée), et portant également un jeu de deux empreintes femelles, qui n'apparaissent pas sur la figure dans un souci évident de simplification. Cet élément mobile (3) coulisse sur des colonnes horizontales de guidage (4), très partiellement représentées sur la figure 1 ;
- enfin, entre ces deux éléments, un bloc central (2), également mobile en translation, et comportant sur chacune de ses deux faces principales en regard des empreintes femelles des éléments précédents (1,3), deux jeux de deux empreintes males (8), en relief et de forme complémentaire à la forme des empreintes femelles. Ce bloc central (2) est guidé sur les colonnes de guidage (4), de sorte à permettre la coopération précise et exacte des différentes empreintes males et femelles entre elles lorsque le moule est fermé. La vitesse de translation de ce bloc central est moitié moindre que celle de l'élément mobile (3), de par la coopération de deux jeux de crémaillères (5,6), solidarisées respectivement à l'élément fixe (1) et à l'élément mobile (3), et coopérant entre elles au niveau du bloc central (2) avec un pignon denté (7) solidaire dudit bloc au niveau duquel elles engrènent. Afin de ne pas surcharger inutilement la figure 1, seul l'un des deux jeux de crémaillères a été représenté, étant entendu que l'autre jeu est totalement symétrique, et situé sur l'autre face latérale des éléments (1, 2, 3).

Chacun des éléments, fixe (1) et mobile (3) reçoit en partie supérieure autant de magasins (10), destinés à stocker des étiquettes souples, qu'il y a d'empreintes femelles (9). Ces magasins sont situés exac-tement dans l'alignement vertical desdites empreintes. Ils sont avantageusement inclinés par rapport à l'horizontale, et sont munis d'un organe approprié, propre à maintenir les étiquettes selon une position verticale, et à induire une poussée en direction de l'ouverture inférieure desdits magasins.

Les étiquettes sont destinées à revêtir en tout ou en partie l'objet moulé au niveau des empreintes. Elles sont susceptibles de présenter des découpes, afin de permettre leur adaptation précise à tout type de forme. Elles sont réalisées en un matériau thermoplastique, qui lors de l'injection de la matière plastique dans le moule, adhèrent à celle-ci sous l'effet de la chaleur. De fait, elles adoptent une forme complémentaire à la forme définitive de l'objet moulé, et épousent parfaitement celle-ci.

Selon l'invention, l'acheminement des étiquettes au niveau des empreintes femelles (9) fait appel à un organe de saisie desdites étiquettes hors du magasin correspondant (10), constitué par une main de préhension (31), associé à un organe de transfert des étiquettes dans l'empreinte.

La main de préhension (31) est à débattement exclusivement horizontal, et est solidaire d'un bras (11) monté sur un vérin horizontal double effet (32), fixé sur le bati (33) de l'élément fixe (1), respectivement mobile (3). La main elle-même est également solidaire de l'extrémité d'un second vérin double effet (non représenté), fixé sur le bras (11). De la sorte, sous l'action de ce dernier, la main (31) peut venir prendre unitairement les étiquettes au niveau du magasin (10), et ce par le biais de ventouses (34), positionnées sur la face en regard du magasin et reliées à une source de vide, puis dégager ladite étiquette hors du magasin, et enfin la positionner contre un premier jeu de courroies dites d'"appui" (22), décrit plus en détail ultérieurement.

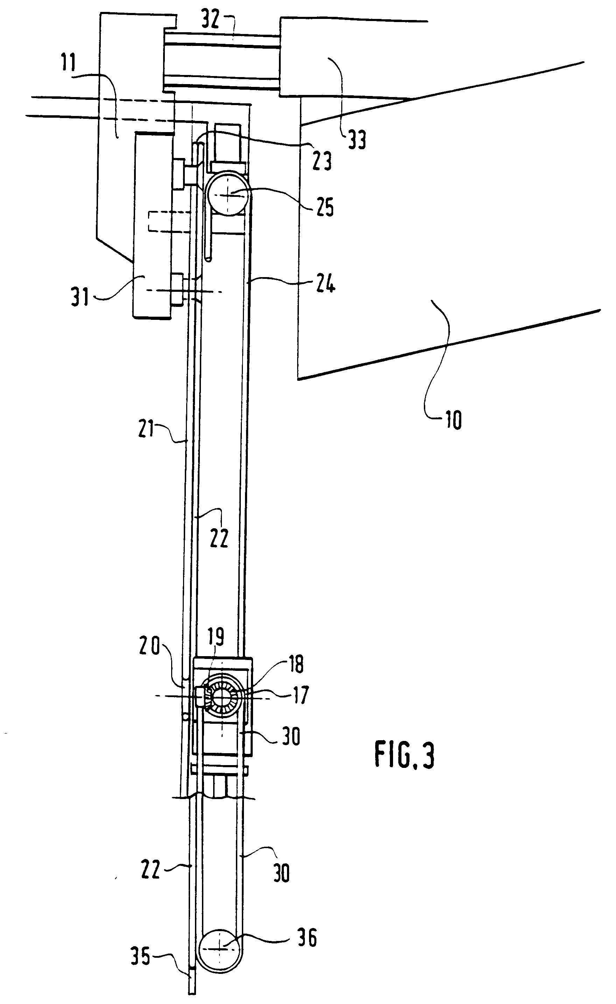

Il va être maintenant décrit en détail l'organe de transfert proprement dit, conformément à l'invention. Cet organe est fondamentalement constitué, pour chacune des empreintes femelles, d'un double jeux de courroies, respectivement d'appui et de maintien, par exemple réalisées en polyuréthanne. Ces deux jeux de courroies s'étendant sensiblement verticalement et en contact intime l'un avec l'autre, ainsi que l'on peut notamment le voir sur la figure 3.

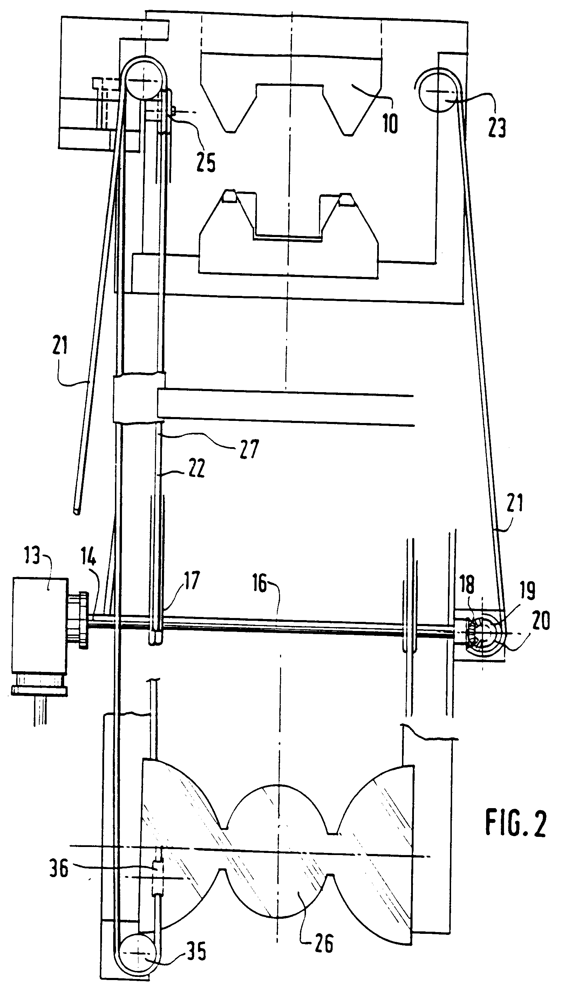

Chacune des courroies d'appui (22) est montée selon une boucle fermée et totalement verticale, entre deux poulies de renvoi, respectivement supérieure (23) et inférieure (35). La poulie supérieure (23) est positionnée sensiblement au dessus de l'extrémité ouverte du magasin (10) correspondant, et la poulie inférieure (35) est située à l'intérieur du moule, légèrement en dessus du niveau supérieur de l'empreinte femelle. Les boucles constitutives de ces courroies d'appui (22) sont situées dans un plan parallèle au plan des étiquettes. De fait, les étiquettes viennent en appui que contre le brin de boucle intérieur, ainsi qu'on peut l'observer sur la figure 2.

Les courroies de maintien sont en fait constituées de deux jeux de deux courroies, respectivement un jeu supérieur (24), et un jeu inférieur (30). Le jeu supérieur est constitué de deux boucles fermées (24) s'étendantt chacune entre deux poulies de renvoi, respectivement supérieure (24), située sensiblement au niveau de la poulie de renvoi supérieure de la boucle (22), et inférieure (17), située sur un axe horizontal de transmission de rotation (16), décrit également plus en détail ultérieurement. Le jeu inférieur est également constitué de deux boucles fermées, s'étendant chacune entre la poulie inférieure (17) et une poulie de renvoi (36) situé au sein du moule, à un niveau légèrement supérieur de celui de la poulie de renvoi (35) des couroies d'appui (22). Ces boucles inférieures du jeu de maintien sont situées dans un plan perpendiculaire au plan contenant les boucles d'appui (22).

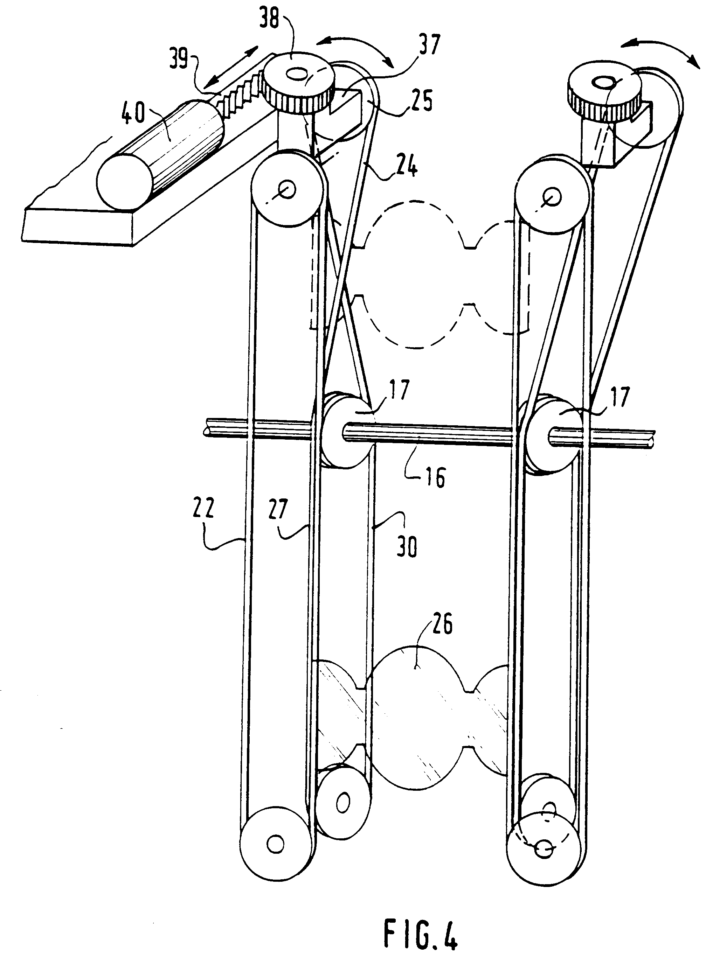

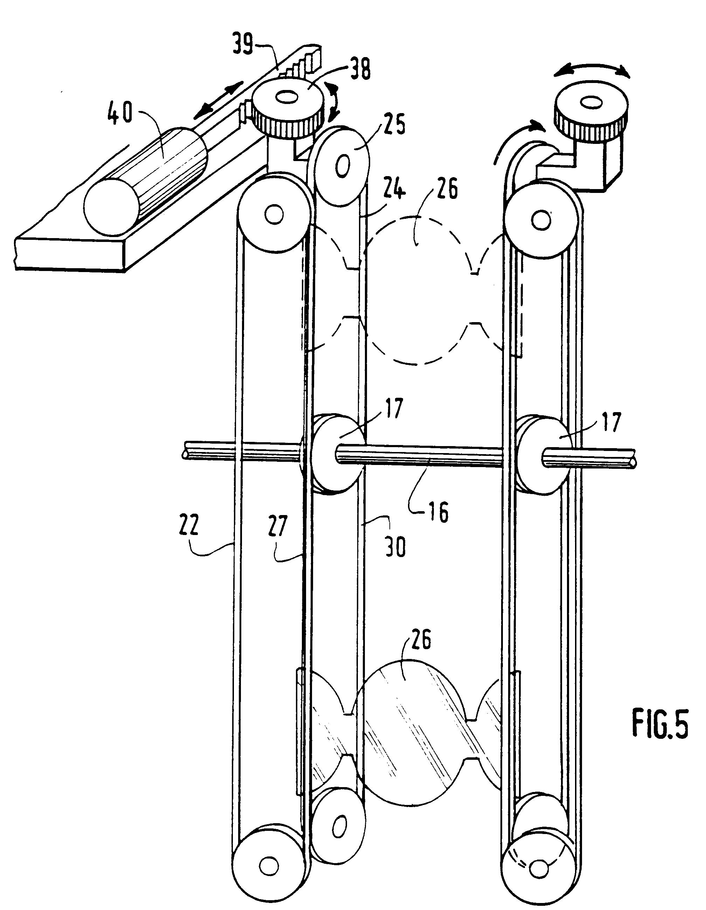

Selon une caractéristique de l'invention, le jeu supérieur (24) des courroies de maintien est susceptible de pivoter en direction du magasin (10) par rapport à l'axe horizontal de transmission de rotation (16). Pour ce faire, les poulies de renvoi supérieures (25) sont montées sur un axe de rotation horizontal (37), lui-même solidaire d'un pignon denté (38) à axe de rotation vertical. Ce pignon denté (38) est destiné à coopérer avec une crémaillère linéaire (39), actionnée par un vérin (40) solidaire du chassis de l'élément fixe (1), respectivement de l'élément mobile (3). Ce vérin (40) est lui-même actionné sous injonction de l'automate coordonnant le fonctionnant du moule. Ainsi, en fonction de l'état d'activation dudit vérin (40), l'axe de la poulie de renvoi supérieure (25) pivote de 90 degrés par rapport à sa position initiale, pour se retrouver dans un plan parallèle au plan contenant les courroies d'appui (voir les figures 4 et 5). Selon l'invention, il y a pivotement lors de la fermeture du moule, de telle sorte à permettre la mise en place d'une étiquette contre les courroies d'appui, préalablement à son transfert à l'interieur dudit moule.

Il va être maintenant décrit plus en détail la motorisation des différentes courroies. Comme déjà dit, l'activation des courroies est directement corrélée avec la vitesse d'ouverture ou de fermeture du moule. Pour ce faire, ledit moule est muni de deux vis sans fin horizontales (12), dont l'une des extrémités est muni d'un pignon conique (non représenté), avantageusement à denture spiralée afin d'augmenter la précision relative des rotations engendrées, et venant engréner dans un pignon de même nature, au niveau d'un dispositif couramment dénommé renvoi d'angle (13), positionné d'une part au niveau de l'élément fixe (1), et d'autre part, au niveau de l'élément mobile (3). Lesdites vis sans fin (12) coopèrent chacune au niveau d'un écrou fixe central (15), solidaire du bloc central (2), lui-même soumis, comme déjà dit, à une translation horizontale à une vitesse moitié de la vitesse de translation de l'élément mobile (3). De la sorte, lors du déplacement de l'élément mobile (3), induisant en outre le déplacement du bloc central (2), et compte tenu de l'écrou fixe (15) solidaire de ce bloc central, le rapprochement relatif, d'une part du bloc central (2) et de l'élément mobile (3), et d'autre part du bloc central (2) et de l'élément fixe (1), induit la rotation des vis sans fin (15), et de par la présence des renvois d'angle (13), celle des arbres de sortie (14) desdits renvois d'angle, orientés à 90 degrés par rapport aux vis sans fin (12).

Le sens du filetage des deux vis sans fin (12) est bien entendu choisi de telle sorte à induire, lors de l'ouverture du moule, la descente des brins de courroies susceptibles de se trouver en contact avec une étiquette, et corollairement, lors de la fermeture du moule, soit la remontée desdits brins, soit le débrayage de l'activation desdites courroies.

Avantageusement, et afin de limiter au maximum les contraintes exercées, notamment au niveau des vis sans fin (12) lors de l'ouverture et de la fermeture du moule, l'écrou fixe (15) est un écrou à billes recyclées d'un type en soi connu, éliminant de la sorte les forces de frottement exercées à son niveau.

Les deux arbres de sortie (14) de chaque renvoi d'angle (13) sont directement couplés à deux axes de transmission de rotation (16) mentionnés précédemment, à savoir un axe pour chaque empreinte femelle (9). Chaque arbre de transmission comporte tout d'abord deux poulies à double gorge (17), destinée à entrainer d'une part les deux courroies supérieures de maintien (24), et d'autre part les courroies inférieures de maintien (30). Ces deux poulies ont une gorge de même diamètre, afin d'induire le déplacement des brins des courroies à une même vitesse linéaire. Ensuite, chacune des extrémités desdits axes de transmission de rotation (16) comporte un pignon conique denté (18), avantageusement à denture spiralée, destiné à engéner dans un pignon de même nature (19), avec un rapport des vitesses de 1/1, ledit pignon (19) étant solidaire d'une poulie (20) de même diamètre que les poulies (17), et destinée à entrainer une courroie (21) d'entrainement des courroies d'appui (22), situées en position externe par rapport au moule. En effet, cette courroie (21) est montée en boucle fermée d'une part autour de cette poulie (20), et d'autre part autour d'une poulie à double gorge (23), dont l'autre gorge reçoit la courroie d'appui (22). La poulie à double gorge (23) a également un diamètre identique aux poulies (17), de telle sorte à obtenir un déplacement à vitesse identique des courroies de maintien et d'appui.

S'agissant des courroies d'appui en position interne, le principe de leur activation demeure identique. Un pignon conique denté (non représenté) étant monté immédiatement en début de l'axe de transmission (16), et coopérant avec un pignon de même nature avec le même rapport, solidaire d'une poulie d'entrainement, également non représentée, assurant l'activation d'une courroie d'entrainement, entrainant la rotation d'une poulie double gorge (23), située sensiblement au niveau supérieur du magasin correspondant (10).

De la sorte, l'ensemble des courroies est activé en liaison directe avec l'ouverture et la fermeture du moule. Les vitesses de cheminement des courroies peut être très facilement réglées, soit par modification du diamètre des poulies d'entrainement ou de renvoi, soit par la modification des rapports de denture des pignons des renvois d'angle, soit encore, par la modification du pas du filetage des vis sans fin horizontales (12).

Il va être décrit le fonctionnement du moule et de ses organes de transfert conformément à l'invention. Le moule étant fermé, il y a pivotement de l'extrémité supérieure des courroies de maintien supérieures (24) en direction du magasin (10) correspondant, sous l'action du vérin (40) relayée par la crémaillère (39) et le pignon denté (38) (voir figure 4). Corollairement, la main de préhension (31) est activée, et va saisir par le biais de ses ventouses (34) une étiquette (26) dans le magasin (10), puis vient la plaquer contre les courroies d'appui (22). Lors de l'ouverture du moule, le vérin (40) est actionné dans l'autre sens, de telle sorte à ramener l'extrémité supérieure des courroies de maintien supérieures (24) contre le brin interne (27) des courroies d'appui (22), les dites courroies, respectivement d'appui (22), et de maintien (24,30) étant alors activées à vitesse égale, afin d'induire la descente accompagnée de l'étiquette jusqu'au niveau de l'empreinte femelle considérée (9). L'étiquette (26) est alors lancée vers le bas sur une distance de 120 millimètres de par la vitesse qui lui est imprimée par lesdites courroies, puis est reçue sur deux taquets situés latéralement de part et d'autre de l'empreinte femelle. L'étiquette est prise en charge par l'arrivée de l'empreinte male (8). Lorsque le moule est complètement fermé, il y a injection de la matière plastique. Lors de la nouvelle ouverture du moule, un nouveau cycle démarre.

Ce principe de transfert évite donc toute étape intermédiaire de dépôt de l'étiquette, qui outre la consommation de temps qu'elle engendre, altère également la précision de mise en place de l'étiquette au niveau de l'empreinte femelle. De plus, l'organe de transfert de l'invention permet la mise en place de n'importe quel type d'étiquettes, quels que soient leur forme, leur masse, leur rigidité ou au contraire leur souplesse, ce que l'on ne savait faire efficacement à ce jour.

Enfin, le recours à un système de motorisation par renvoi d'angle, donc directement correlé à l'ouverture et à la fermeture du moule, permet d'aboutir à des cadences de production élevées, de réduire de manière significative la course d'ouverture du moule, et partant de réduire l'encombrement de telles machines à injection.

## Revendications

**1/** Dispositif pour amener et déposer une pluralité d'étiquettes souples (26) dans un moule de machines à injection de matière plastique à double étages comprenant :
- un premier élément fixe (1), incluant un premier jeu d'empreintes femelles (9), correspondant à la forme de l'objet à réaliser lors de l'injection de la matière plastique ;
- un deuxième élément (3), mobile en translation, comprenant également un jeu d'empreintes femelles (9),
- un bloc central (2), portant sur chacune de ses faces principales en regard desdits éléments respectivement fixe (1) et mobile (3), un jeu d'empreintes mâles (8), destinées à coopérer avec lesdites empreintes femelles (9), ledit bloc étant mu également en translation sous l'action de l'élément mobile (3) à une vitesse inférieure à la vitesse de translation de celui-ci,
- un magasin (10) associé à chacun des jeux d'empreintes femelles (9), disposé respectivement au dessus des éléments fixe (1) et mobile (3) du moule,
- pour chacune des empreintes femelles (9), un moyen d'amenée de l'étiquette en regard de l'empreinte femelle de chacun des éléments fixe et mobile du moule, comprenant chacun un organe de saisie (11,31,32,33) de l'étiquette (26) dans le magasin (10) correspondant et un organe de transfert (21,22,24,30) de l'étiquette dans le moule lors de l'ouverture de celui-ci,
***caractérisé*** en ce que l'organe de transfert de l'étiquette dans le moule est constitué par un double jeu de courroies montées en boucles fermées, et mues en translation sensiblement verticale entre le niveau dudit magasin (10) et l'intérieur du moule, respectivement un premier jeu de deux courroies continues dites "d'appui" (22), s'étendant jusqu'au niveau supérieur de l'empreinte femelle (9) considérée, et un second jeu de deux courroies dites "de maintien" (24,30), en contact étroit au moins temporairement avec le jeu de courroies de maintien, et dont la portion supérieure est susceptible de pivoter en direction dudit magasin lors de la fermeture du moule, afin de permettre la mise en place de l'étiquette juste issue du magasin en regard au niveau des courroies d'appui, l'ensemble des courroies étant mues en translation au moyen de deux vis sans fin horizontales (12) par l'intermédiaire de deux renvois d'angle (13), positionnés respectivement au niveau de l'élément fixe (1) et de l'élement mobile (3) du moule, la rotation des vis sans fin horizontales étant elle même assurée par le déplacement relatif de l'élément mobile et du bloc central par rapport respectivement au bloc central et à l'élément fixe, ledit bloc central étant muni d'un écrou fixe (15) au niveau duquel coopèrent lesdites vis horizontales.

**2/** Dispositif selon la revendication 1, ***caractérisé*** en ce que les poulies de renvoi supérieures (25) des deux courroies (24) dites de maintien sont montées à l'extrémité d'un bras pivotant (37), solidaire d'un secteur denté (38), d'axe de rotation verticale, ledit secteur denté (38) étant susceptible de coopérer avec une crémaillère (39) activée en translation au moyen d'un verin (40), commandé par l'automate de programmation de l'ouverture et de fermeture du moule.

**3/** Dispositif selon l'une des revendications 1 et 2, ***caractérisé*** en ce que les courroies de maintien sont constituées de deux jeux, respectivement un jeu supérieur (24), s'étendant entre des poulies de renvoi supérieures (25) et des poulies de renvoi (17) coaxiales avec l'axe de transmission de rotation (16) couplé à l'un des arbres de sortie (14) du renvoi d'angle (13), et un second jeu inférieur (30), s'étendant desdites poulies (17) à une poulie de renvoi inférieure (36).

**4/** Dispositif selon l'une des revendications 1 à 3, ***caractérisé*** en ce que les jeux de courroies, respectivement d'appui (22) et de maintien (24,30), sont au moins temporairement situées dans deux plans perpendiculaires.
